# EUROPEAN PATENT APPLICATION

(11) **EP 4 841 441 A1**
(43) Date of publication of application: **18.11.2026**
(21) Application number: 25175895.9
(22) Date of filing: 13.05.2025
(51) Int. Cl.: G06F 9/48, G06F 9/50, H04L 47/50, H04L 47/60

(54) **DISTRIBUTED SCHEDULING OF EVENT QUEUES**

(71) Applicant: Nokia Solutions and Networks Oy, 02610 Espoo (FI)
(72) Inventor: DEBURCHGRAEVE, Wouter, Willebroek (BE)
(74) Representative: Nokia EPO representatives

(57) **Abstract**

Approaches for scheduling an event on a distributed event scheduler (DES), are described. In an example, event queue may be monitored by a centralized event scheduler (CES) to detect presence of a plurality of events. Thereafter, a number of available processing cores from amongst a plurality of processing cores may be determined. Once determined, the CES may launch the DES on a selected core. With the DES launched, the event queue may be transferred from the CES to the DES for processing on the selected core.

## Description

### TECHNICAL FIELD

Various examples described herein relate to approaches for scheduling events within multicore systems, for example, networking systems or telecommunication systems.

### BACKGROUND

Modern computing applications are subject to continuously increasing processing requirements. In the context of next-generation communication systems, such as 5G and emerging 6G networks, the computational burden imposed on network elements and user devices has significantly increased due to the need for ultra-low latency, high throughput, and real-time data processing capabilities. Historically, such rising computational demands were accommodated primarily by enhancements in the execution speed of individual processing cores. However, recent advancements in semiconductor technology have reached a point where substantial gains in single-core processing performance are challenging to achieve with each successive processor generations. As a result, improvements in overall processing power are now predominantly realized through architectural scaling, for instance, by integrating a plurality of parallel processing cores within a single chip.

### BRIEF DESCRIPTION OF THE DRAWINGS

The following detailed description references the drawings, wherein:
FIG. 1 illustrates a system for scheduling an event queue using a distributed event scheduler, as per an example of the present subject matter;
FIG. 2 illustrates a network environment comprising a system for scheduling an event queue using a distributed event scheduler, as per an example of the present subject matter;
FIG. 3 is a block diagram of various components of a system for scheduling an event queue using a distributed event scheduler, as per an implementation of the present subject matter;
FIG. 4 is a block diagram of various components of a system for scheduling an atomic event queue using a distributed event scheduler, as per an implementation of the present subject matter;
FIG. 5 is a block diagram of various components of a system for scheduling a parallel event queue using a distributed event scheduler, as per an implementation of the present subject matter;
FIG. 6 is a block diagram of various components of a system for scheduling event queues grouped into logical scopes or branch sets, using a distributed event scheduler, as per an implementation of the present subject matter;
FIG. 7 is a block diagram of various components of a system for scheduling event queues grouped into logical scopes or branch sets on different processor nodes, using a distributed event scheduler, as per an implementation of the present subject matter;
FIG. 8 is a block diagram of various components of a system for scheduling event queues grouped into logical scopes or branch sets on different host systems, using a distributed event scheduler, as per an implementation of the present subject matter;
FIG. 9 is a flowchart depicting an example method for scheduling event queues grouped into logical scopes or branch sets, using a distributed event scheduler, as per an implementation of the present subject matter;
FIG. 10 is a flowchart depicting an example method for scheduling an atomic event queue using a distributed event scheduler, as per an implementation of the present subject matter;
FIG. 11 is a flowchart depicting an example method for scheduling a parallel event queue using a distributed event scheduler, as per an implementation of the present subject matter;
FIG. 12 is a flowchart depicting an example method for scheduling event queues grouped into logical scopes or branch sets, using a distributed event scheduler, as per another implementation of the present subject matter;
FIG. 13 is a flowchart depicting an example method for scheduling event queues grouped into logical scopes or branch sets on different processor nodes, using a distributed event scheduler, as per an implementation of the present subject matter;
FIG. 14 is a flowchart depicting an example method for scheduling event queues grouped into logical scopes or branch sets on different host systems, using a distributed event scheduler, as per an implementation of the present subject matter; and
FIG. 15 illustrates a non-transitory computer-readable medium for scheduling event queues grouped into logical scopes or branch sets on different host systems, as per an implementation of the present subject matter.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION

As discussed previously, complex computing applications face growing processing demands, especially in advanced communication systems, like 5G and 6G, requiring ultra-low latency, high throughput, and real-time processing. Although earlier improvements relied on faster single-core performance, further gains have been only incremental. Consequently, enhanced processing power now mainly comes from integrating multiple parallel cores on a single chip.

Typically, applications are implemented as processing pipelines composed of discrete events within complex systems (say systems operating in a networking data plane). Such pipelines are designed to execute events in periodic intervals, commonly referred to as slots. Within each slot, the system (such as a network system) must process a complete set of event pipelines or queues, and their constituent events. Event-driven processing is structured around a cyclic execution model designed to meet real-time processing demands of high-performance networking environments, such as mobile core and radio access networks. An event, in this context, may be considered as any data structure or data prescribing payload information (e.g., a packet or control message) to be processed, or some operation or action to be performed.

The processing of the events and the event queues may generally be coordinated through a centralized event scheduler. The centralized event scheduler, in such instances, may assume ownership of a set of event queues. The centralized scheduler may monitor and retrieve one or more queues based on predefined priority schemes, scheduling policies, or other criteria. Once retrieved, the events are distributed by the scheduler to available resources, such as processing cores, for processing. It may be the case that the execution or processing of any event in an event queue may result or generate further other events.

These methodologies pose certain technical limitations. For example, event queues are generally executed on a single core, involving sequential execution, or processing of multiple events on the same core. Such sequential execution may be preferrable for a smaller number of events. However, as the number of events and/or complexity of systems increase, it may become challenging to undertake the processing of events within permitted slot thereby increasing the possibilities of bottlenecking, which directly impacts the operational efficiency of such systems. Furthermore, the manner in which larger events are handled may also pose challenges. For example, certain issues may also arise when larger events are split into multiple smaller events. Such resulting smaller events may be created quickly in a short duration of time, leading to a 'burst' of events. Such bursts may, yet again, load the centralized event scheduler, which is tasked with completing the execution of such events within the predefined slot.

Additional challenges have been identified as arising due to heterogeneous nature of computing architectures in various systems. For example, processor architectures are increasingly adopting tile-based designs. Tile-based architecture comprises a group of communicatively coupled processing cores, which may share resources, such as memory. The entire processor may then be realized by coupling and combining multiple such tiles. It may be noted that communication between processing cores implemented within the same tile is quicker when compared with communication between cores located on different tiles. Such variations in architectural characteristic may impact scheduling and processing of events. Similar challenges may also be present when scheduling events across processing cores that may be implemented across multiple host systems.

Approaches for scheduling an event queue using a distributed event scheduler, are described. In an example, an event queue may be monitored to detect presence of a plurality of events. The plurality of events may be originally present in the event queue or may be produced as a result of the processing and/or execution of prior events. The event queue is associated and managed by a centralized event scheduler. Thereafter, a number of available processing cores from a plurality of processing cores may be determined. In an example, the number of available processing cores may be identified based on a list of available processing cores. The list of available processing cores, in an example, may be stored in a memory resource that may be accessible by the centralized event scheduler. With the selected core identified, the centralized event scheduler may launch a distributed event scheduler, as a separate event, on the selected core. With the distributed event scheduler initiated, the centralized event scheduler may transfer or offload the event queue to the distributed event scheduler. Once offloaded, the distributed event scheduler may take over the processing of the transferred event queue, on the selected core. In an example, the event queue may be an atomic queue or a parallel queue.

It may be noted that the centralized event scheduler may initiate or launch the distributed event scheduler for handling event queues grouped into logical scopes or sets, referred to as branches. In an example, the centralized event scheduler may monitor a root branched set which is associated or managed by the centralized event scheduler. The root branch set may further comprise a first branch set and a second branch set. The first branch set, and the second branch set may correspond to an event pipeline corresponding to an application. In an example, the first branch set may further comprise hierarchically linked queues (referred to as the first queue set). In a similar manner, the second branch set comprises hierarchically linked queues (referred to as the second queue set). The first queue set and the second queue set, may each include a plurality of events executing in the application pipeline.

Proceeding further, a selected core may be elected from amongst a plurality of available cores. Once the selected core is identified, the centralized event scheduler may launch a distributed event scheduler, as a separate event, on the selected core. With the distributed event scheduler launched, the centralized event scheduler may thereafter, transfer or offload the second branch set from the centralized event scheduler to the distributed event scheduler. Once offloaded, the distributed event scheduler may undertake the processing of the second queue set on the selected core. It may be noted that although the present example has been explained in the context of the first queue set and the first queue set, the same approach may be extended to multiple other queue sets without deviating from the scope of the present subject matter. In such instances, the centralized event scheduler may launch further number of distributed event schedulers, after which the centralized event scheduler may offload the other queue sets onto the distributed event scheduler. In an example, the selected core may be implemented on a processing tile which is remote to a native processing tile implementing the native core.

These examples may be implemented not only for the instances described above, but also for instances involving different host systems. For example, the centralized event scheduler may be executing in a first host system. The centralized event scheduler may initially identify an available core, referred to as a target core implemented within a second host system. The second host system may be in communication with the first system but is remote from the first host system. Once determined, the centralized event scheduler may launch the distributed event scheduler on the target core. Thereafter, the centralized event scheduler may transfer or offload the second branch from the centralized event scheduler to the distributed event scheduler (i.e., onto the target core on the distributed event scheduler). Once offloaded, the distributed event scheduler may process the second queue set on the target core within the second host system.

The above-described approaches afford a number of technical advantages. For example, having a distributed event scheduler process and manage the transferred event queue, enhances the scalability of the scheduling architecture to deal with large number of events (e.g., bursts of events). The scheduling through the distributed event scheduler also allows integration of application knowledge captured in the form of root branched set (and constituent hierarchically linked queue sets), into the scheduling mechanism, thereby providing adaptability to handle dynamic application loads. The distributed event scheduler also allows to scale as per the system architecture or even in examples involves different host systems, with low latency scheduling. These and other examples are further described in conjunction with accompanying figures and in the context of other examples.

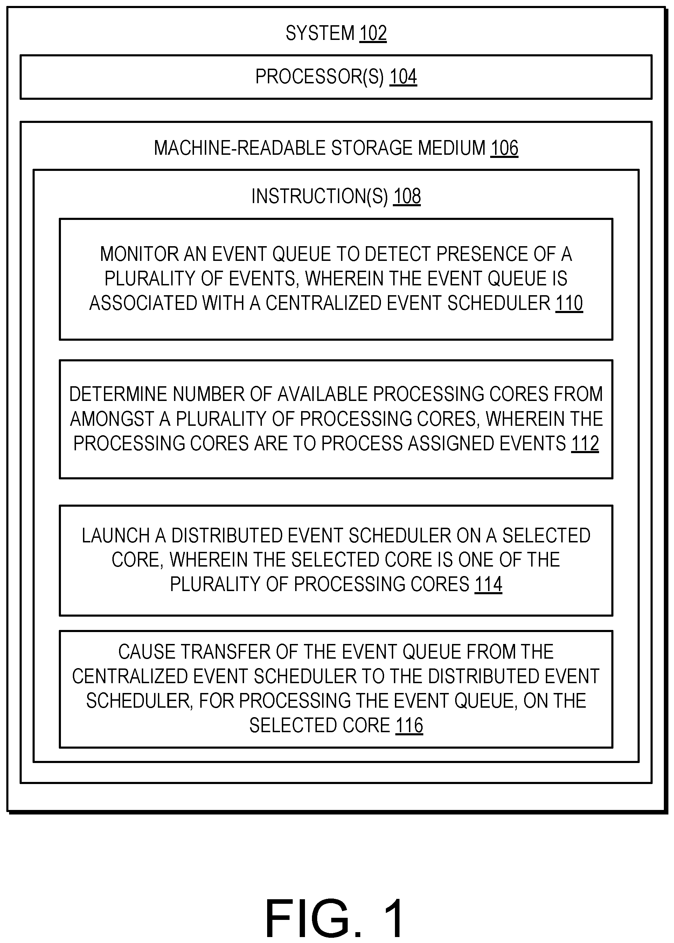

FIG. 1 illustrates system 102 for scheduling events, as per one example. The system 102, as will be explained further, may be any system which may be utilized for implementing one or more applications executing on multicore processing units. The applications may be programs or coded instructions implemented in a computing system or systems implemented within a communication network. In latter cases, the applications, when executed, may implement operations such as uplink or downlink packet scheduling. It may be noted that such examples are only indicative and are not to be construed as limiting the scope of the claimed subject matter in any manner.

The system 102 may be implemented as processor-based computing systems, such as servers, networking or may be specialized networking SoCs, in an example. The system 102 includes a processor 104 and a machine-readable storage medium 106 which is coupled to, and accessible by, the processor 104. The system 102 may be implemented in any computing system, such as a storage array, server, desktop or similar computing device, a distributed computing system, or the like. Although not depicted, the system 102 may include other components, such as interfaces to communicate over the network or with external storage or computing devices, display, input/output interfaces, operating systems, applications, data, and other software or hardware components (all of which have not been depicted). The system 102 may also be implemented on various network systems or apparatus for deploying applications pertaining to various network-related operations. It may be noted that such different examples of the system 102 are only indicative. Other examples are also possible, without deviating from the scope of the present subject matter.

Returning to the present example, the processor 104 may be implemented as a dedicated processor, a shared processor, or a plurality of individual processors, some of which may be shared. The machine-readable storage medium 106 may be communicatively connected to the processor 104. Among other capabilities, the processor 104 may fetch and execute computer-readable instructions, including instructions 108, stored in the machine-readable storage medium 106.

In an example, the processor 104 may fetch and execute instructions 108. In one example, as a result of the execution of the instructions 110, the system 102 may monitor an event queue to detect presence of a plurality of events. In an example, the plurality of events may be generated as a result of the execution of an application. In an example, an event may be understood as any data structure, data, or information prescribing payload information (e.g., a packet or control message) to be processed, or an operation or action to be performed in relation to the execution of the application. In the present example, the event queue (which includes the plurality of events) may be associated with a centralized event scheduler. As will also be explained in further detail, later, the centralized event scheduler determines priorities for different events and accordingly schedules the events for processing onto an available processing resource, for example, a processing core.

As a result of the execution of the instructions 112, a number of available processing cores may be determined. Once the available cores are determined, the instructions 114 may be executed. In an example, as a result of the execution of the instructions 114 a distributed event scheduler may be launched. The distributed event scheduler may be launched as a separate event on a selected core. In an example, the selected core is determined from the plurality of available processing cores. Thereafter, the instructions 116 may be executed. As a result of the execution of the instructions 116, the event queue may be transferred or offloaded from the centralized event scheduler to the distributed event scheduler. Once transferred, the distributed event scheduler may process the transferred event queue onto the selected core.

The above functionalities may be performed by different programmable entities. Such programmable entities may be implemented through any computing systems, which may be implemented either on a single computing device, multiple computing devices or specifically configured SOCs. As will be explained, various examples of the present subject matter are described in the context of a system for scheduling events. These and other examples are further described with respect to the remaining figures.

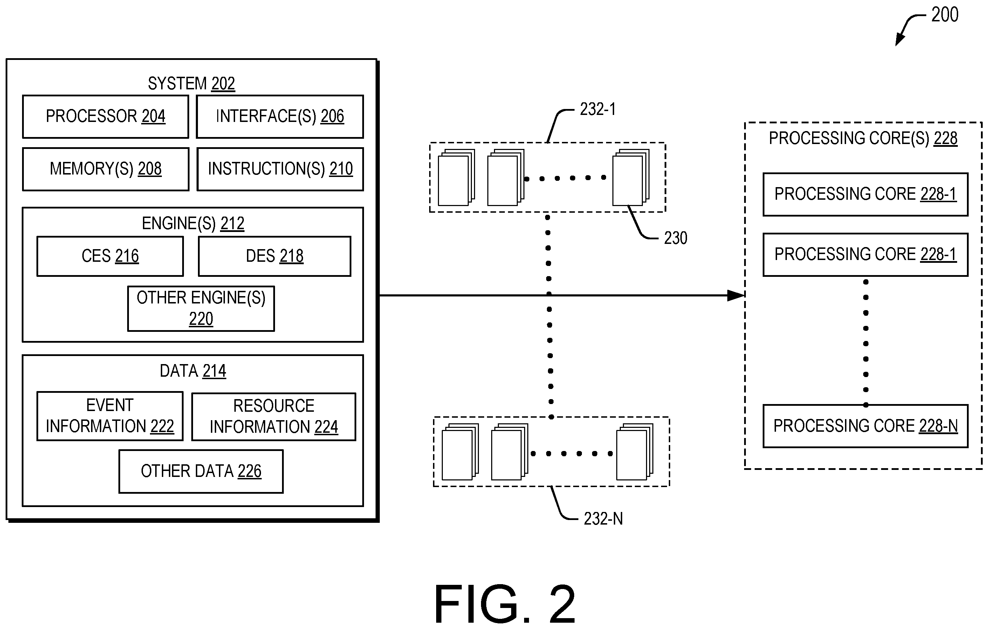

FIG. 2, as per an example, illustrates an environment 200 depicting system 202 along with its functional components, as per an example. It may be noted that such examples of the various functional blocks as depicted, are indicative. The present approaches may be applicable to other examples without deviating from the scope of the present subject matter. The system 202 includes a processor 204, interface(s) 206, and memory(s) 208. In an example, the processor 202 may be implemented as microprocessors, microcomputers, microcontrollers, digital signal processors, central processing units, state machines, logic circuitries, and/or other devices that manipulate signals based on operational instructions.

The interface(s) 206 may allow the connection or coupling of the system 202 with one or more other systems, through a wired (e.g., Local Area Network, i.e., LAN) connection or through a wireless connection (e.g., Bluetooth^{®}, Wi-Fi). The interface(s) 206 may also enable intercommunication between different logical as well as hardware components of the system 202. The interface(s) 206 may also enable the system 202 to communicate with other entities, such as a data repository, or other devices or systems (not shown in the figures) which may be present within a computing or a network environment.

The memory(s) 208 may be a computer-readable medium, examples of which include volatile memory (e.g., RAM), and/or non-volatile memory (e.g., Erasable Programmable read-only memory, i.e., EPROM, flash memory, etc.). The memory(s) 208 may be an external memory, or internal memory, such as a flash drive, a compact disk drive, an external hard disk drive, or the like. The memory(s) 208 may further include data which either may be utilized or generated during the operation of the system 202.

The system 202 may further include instructions 210, engine(s) 212, and data 214. In an example, the instructions 210 are fetched from the memory 206 and executed by the processor 202 included within the system 202. The instructions 210 once executed may cause the functional components to perform various operations.

The engine(s) 212 may be implemented as a combination of hardware and programming, for example, programmable instructions to implement a variety of functionalities of the engine(s) 212. In examples described herein, such combinations of hardware and programming may be implemented in several different ways. For example, the programming for the engine(s) 212 may be by way of executable instructions. Such instructions may be stored on a non-transitory machine-readable storage medium which may be coupled either directly with the system 202 or indirectly (for example, through networked means).

In an example, the engine(s) 212 may be a processing resource, for example, either a single processor or a combination of multiple processors, to execute such instructions. In other examples, the engine(s) 212 may be implemented as electronic circuitry or by way of software-based instructions. In such cases, execution of the instructions may implement different types of engine(s) 212.

The engine(s) 212 include a centralized event scheduler 216 (referred to as CES 216). In an example, the CES 216 may result as a consequence of execution of the instructions 210 or may result from the execution of one or more applications that may be running on a processing resource. As will be further explained, the CES 216 may further launch a distributed event scheduler 218 (referred to as the DES 218) for handling the scheduling of one or more event(s). In an example, the engine(s) 212 may further include and other engine(s) 220. The other engine(s) 220 may further implement functionalities that supplement functions performed by the system 202 or any of the engine(s) 212.

The data 214, on the other hand, includes data that is either stored or generated as a result of functions implemented by any of the engine(s) 212 or the system 202. It may be further noted that information stored and available in data 214 may be utilized by the engine(s) 212 for performing various functions to be implemented by the system 202. In an example, data 214 may include event information 222, resource information 224, and other data 226. The other data 226, includes data that is either stored or generated as a result of functions implemented by any of the engine(s) 212 or the system 202.

The system 202 is such that it may be in communication with one or more processing core(s) 228-1, 2, ..., N (collectively referred to as processing core(s) 228). In an example, the processing core(s) 228 may refer to a processor core or may refer to hardware thread on multi-threaded cores. Either of such implementations (or in some cases even a combination) may be used without deviating from the scope of the present subject matter.

The system 202 may be used for managing events corresponding to an application that may be executing on a pool of processing core(s) 228. As discussed previously, an event may be considered as any data structure or data prescribing payload information (e.g., a packet or control message) to be processed, or some operation or action to be performed. Multiple events, such as the event(s) 230 may be generated. In an example, the event(s) 230 may be sent to application specific queues, referred to as the event queue(s) 232-1, 2, ..., N (collectively referred to as event queue(s) 232).

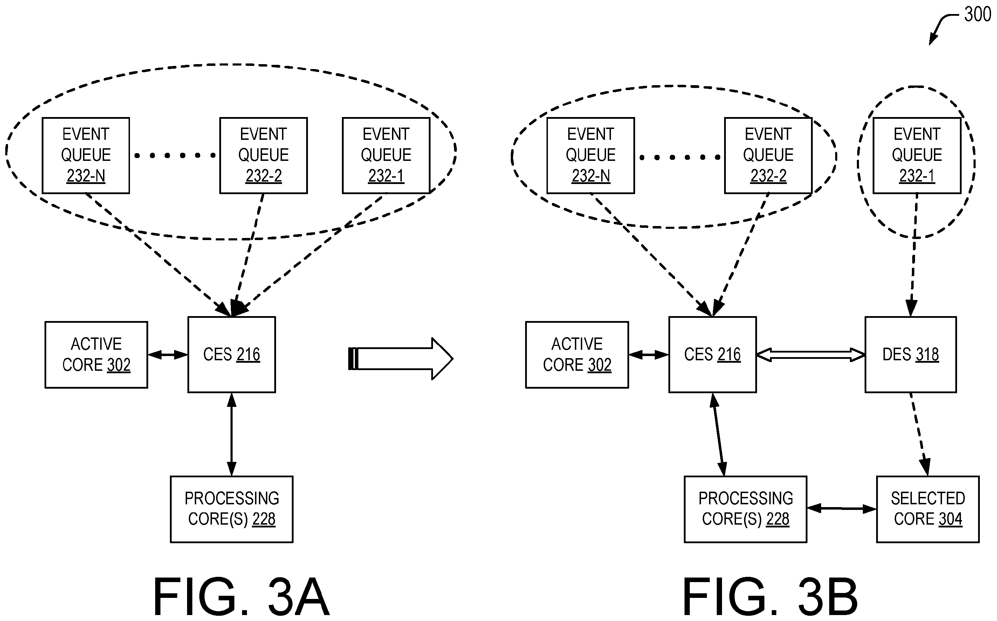

As will be explained in conjunction with later examples, the handling and scheduling of the event(s) 230 in the event queue(s) 232 may be undertaken by the CES 216 and the DES 218. To this end, the CES 216 may launch the DES 218, and transfer or offload the event queue(s) 232 initially associated with it, to the DES 218 for further scheduling and processing on any one or more of the processing core(s) 228. Once all event(s) 230 within the event queue(s) 232 are processed, the DES 218 may be terminated. Different example scenarios are discussed in which the CES 216 and the DES 218 schedule and handle the event(s) 230 within the event queue(s) 232, in relation to FIGS. 3-8.

FIGS. 3-5, as per an example, illustrate the manner in which the event queue(s) 232 may be scheduled and processed by the CES 216 and the DES 218. FIGS. 3A-3B illustrates an example environment 300, in which the event queue(s) 232 is scheduled and processed. The environment 300 comprises the system 202, which implements the CES 216. In an example, the CES 216 may monitor the event queue(s) 232, wherein the event queue(s) 232 may include a series of event(s) 230. Initially, the CES 216 is to monitor all the event queue(s) 232 (i.e., the event queue(s) 232-1, 2,...,N) associated with it. The event queue(s) 232 which are being managed by the CES 216 may be said to be present within the scope or within the context of the CES 216. In such a case, the CES 216 may be responsible for scheduling and processing the event(s) 230 on any one of the processing core(s) 228. The present example is explained in relation to the CES 216 being associated with the processing core 228-1. The processing core 228-1 may be associated with the CES 216. The CES 216 for processing the event(s) 230 for the event queue(s) 232 within its scope, onto the processing core 228-1.

In an example, the CES 216 may monitor the number of events, i.e., the event(s) 230, which may be present within the event queue(s) 232, wherein which the CES 216 may be scheduling and processing the event(s) 230 on an active core 302 (as shown in FIG. 3A). In certain instances, the number of events may suddenly increase depending on the operation that is being undertaken with respect to an application. The number of event(s) 230 may increase (thereby resulting in a 'burst' of events) owing to number of factors. For example, a certain event may be parallelized which in turn may result in another set of event(s) that in turn be put in the event queue(s) 232, say event queue(s) 232-1. The burst of event(s) within the event queue(s) 232-1 may be detected based on a predefined criteria or a predefined threshold event limit that may be prescribed. Depending on whether the number of the event(s) 230 within the event queue(s) 232-1 exceeds the predefined threshold event limit, the CES 216 may determine that an event burst may have occurred. In an example, the predefined threshold event limit may be stored as event information 222.

On detecting the event burst, the CES 216 may further determine a number of available processing core(s), from amongst the processing core(s) 228. In an example, the number of processing core(s) may be ascertained based on the resource information 224. The resource information 224, in an example, may assist in determining which of the core(s) from amongst the processing core(s) 228 is available. Once the available processing core(s) is identified and selected, the CES 216 may launch a DES 218 on the selected core (referred to as the selected core 304). Although the present explanation is provided in relation to the selected core 304 being identified as the available processing core, any one or more core(s) from the processing core(s) 228 may be determined as available and accordingly selected, based on the resource information 224.

Returning to the present example, with the DES 218 launched, the CES 216 may transfer or offload the event queue(s) 232-1 to the selected core 304 (as shown in FIG. 3B). Once the event queue(s) 232-1 is associated with the DES 218, the DES 218 may schedule and process the event queue(s) 232-1 onto the selected core 304. The scheduling and processing of the event queue(s) 232-1 commences on the selected core 304, with the CES 216 continuing with the scheduling and processing of the other event queue(s) 232 (i.e., other than the event queue(s) 232-1) on the processing core 228-1. As described previously, the event queue(s) 232 which are being managed by the CES 216 may be said to be present within the scope or within the context of the CES 216. When the event queue(s) 232-1 are transferred or offloaded onto the selected core 304, the CES 216 is to transfer the event queue(s) 232-1 to the scope or the context of the DES 218, for further processing.

The scheduling and processing of the event queue(s) 232-1 transferred and offloaded to the DES 218 may continue till all event(s) within said event queue have been processed. In an example, once the event(s) within the event queue(s) 232-1 have been processed, the DES 218 may be terminated and the selected core 304 may be returned to the pool of the processing core(s) 228. It may be noted that the termination of the DES 218 may be triggered based on any other condition. For example, the DES 218 may be terminated after a predefined threshold time window has elapsed or based on a specific termination trigger initiated by the CES 216 in the form of termination call. In another example, the DES 218 may be terminated based on the type of event(s) which may be present in the event queue(s) 232-1. In such a case, if the event(s) correspond to a different type, or has a specific identifier, the DES 218 may be terminated. It may be noted that such termination conditions specified herein are only indicative. Other examples of termination conditions may also be adopted without deviating from the scope of the present subject matter. In an example, the termination conditions may be specified in other data 226.

Examples of the above approaches may be adopted for handling different types of event queue(s) 232. In an example, the event queue(s) 232 may be either an atomic queue or a parallel queue. In this context, an atomic queue may be considered as an event queue in which a new event may only be started when the previous or a preceding event from that queue has finished or has been processed. For a parallel queue, a new event may be started before the previous of the preceding event from that queue is finished or executed (and hence is processed in parallel).

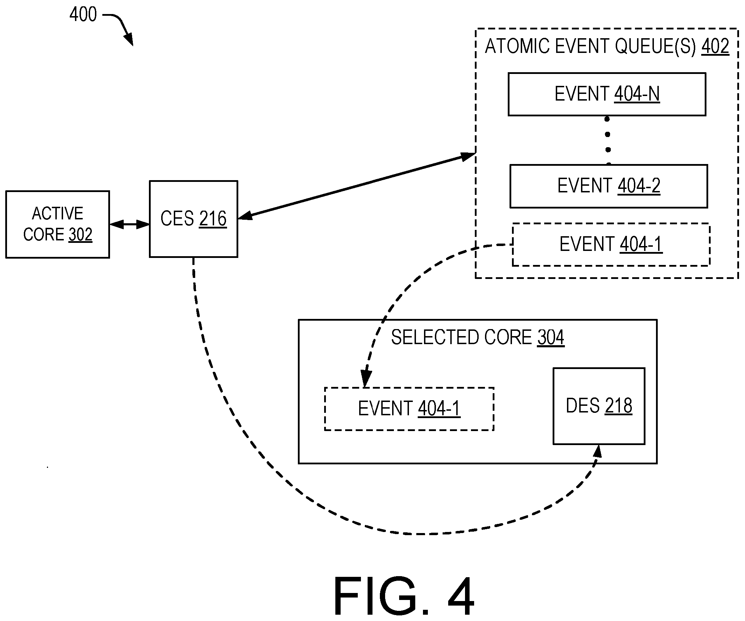

FIG. 4 illustrates an example environment 400 in which the event queue(s) is an atomic queue. In an example, the CES 216 may monitor an atomic event queue(s) 402 for detecting whether any 'burst' of events have occurred. Initially, the CES 216 may schedule and process the events in the atomic queue on the active core 302. In the manner as discussed above, the CES 216 may launch the DES 218 on the selected core 304 (i.e., one of the processing core(s) 228 which were determined to be available). Once the DES 218 is launched on the selected core 304, the atomic event queue(s) 402 may be allocated to the DES 218.

With the atomic event queue(s) 402 allocated to the DES 218, the DES 218 may commence retrieving the event(s) 404 within the atomic event queue(s) 402. As described previously, in an atomic queue, a current event may only be processed if the previous or the preceding event has been processed. If the processing of the prior event has not yet completed, the DES 218 may wait for the processing of the prior event to be completed and may current event may only be processed once the prior event has been completely processed.

These aspects are further explained in the context of one or more event(s) 404-1, 2,..n, N (collectively referred to as the event(s) 404) within the atomic event queue(s) 402, as per an example. Continuing further, the DES 218 is launched on the selected core 304. With the atomic event queue(s) 402 allocated to the DES 218 to be processed within the selected core 304, the DES 218 may retrieve an event, say event 404-1, from the atomic event queue(s) 402. The event 404-1, being an event from an atomic queue, is to be processed. Only when the event 404-1 has been processed, will any other event be processed.

The event 404-1, once retrieved from the atomic event queue(s) 402, will be processed by the DES 218 on the selected core 304. It may be noted that the event 404-1 is processed locally (i.e., local to the DES 218) by the DES 218 on the selected core 304. While the event 404-1 is being processed, the DES 218 may monitor the processing of the event 404-1. Once event 404-1 has been processed, the DES 218 may retrieve the next event, i.e., event 404-2, from the atomic event queue(s) 402. This process may continue till the event(s) 404 within the atomic event queue(s) 402 have been processed. At this stage, the DES 218 may be terminated.

In an example, the DES 218 may also monitor whether any termination conditions have been specified. In such a case, the DES 218 may be terminated if the termination conditions are conformed with. In such a case, the DES 218 may be terminated. In case not all event(s) 404 have been processed within the atomic event queue(s) 402, the DES 218 may transfer the atomic event queue(s) 402 back to the processing scope of the CES 216 for completion. In an example, while the DES 218 is running, one or more additional events may be added to the atomic event queue(s) 402, as a stream of events. If the stream of events being added to the atomic event queue(s) 402 is active, the DES 218 may continue to run on the selected core 304 or till any termination condition (if specified) is met. It may be noted that the atomic event queue(s) 402 which were being managed by the CES 216 may be said to be present within the scope or within the context of the CES 216. When the atomic event queue(s) 402 is transferred or offloaded onto the selected core 304, the CES 216 is to transfer the atomic event queue(s) 402 to the scope or the context of the DES 218, for further processing.

As may be noted, upon completion of the event 404-1, a new event, i.e., event 404-2, is automatically retrieved from the atomic event queue(s) 402 with negligible scheduling latency, since no core synchronization is required between the selected core 304 executing the event 404-1 and the DES 218 which is managing the atomic event queue(s) 402. Such an approach minimizes latency and leverages cache locality, resulting in efficient performance as compared to examples where only the CES 216 were to process the atomic event queue(s) 402. As may also be noted, the present approaches effect parallelization of scheduling events, as the DES 218 and the CES 216 may concurrently schedule events, such as the event(s) 404. This arises since the atomic event queue(s) 402 being processed by the DES 218 does not have any contention with the CES 216, as the DES 218 runs entirely independently from the CES 216.

The above examples have been explained in relation to the CES 216 launching a single instance of the DES 218 on the selected core 304. It may be noted that the CES 216 may also launch multiple instances of DES 218 simultaneously to process the separate atomic event queue(s) 402. As each of the atomic event queue(s) 402 and the corresponding DES 218, operate independently of each other, low scheduling latencies in between said atomic event queues is maintained despite handling such multiple atomic event queue(s) 402.

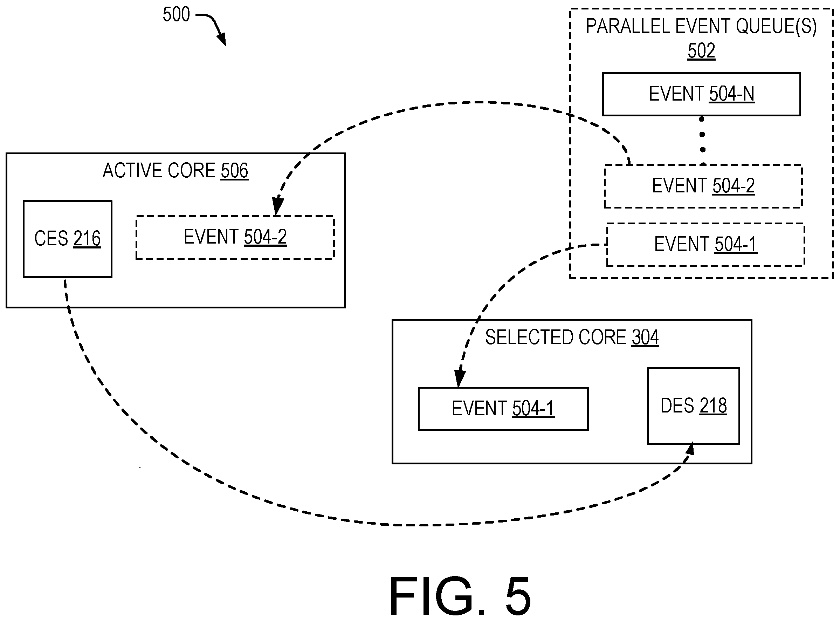

FIG. 5 illustrates an example environment 500 depicting a parallel event queue(s) 502 comprising multiple event(s) 504-1, 2, ..., N (collectively referred to as the event(s) 504). As described previously, a parallel queue is such that a new event may be retrieved for processing before any one or more previous event from that queue have finished or executed and processed. In an example, the CES 216 may monitor the parallel event queue(s) 502. In the manner as discussed above, the CES 216 may launch the DES 218 on the selected core 304 (i.e., one of the processing core(s) 228 which were determined to be available), while the CES 216 may be executing on a previous processing core, referred to as the active core 506. The selected core 304 and the active core 506 may be determined from the pool of processing core(s) 228. Once the DES 218 is launched on the selected core 304, the parallel event queue(s) 502 may be allocated to the DES 218.

With the parallel event queue(s) 502 allocated to the DES 218, the DES 218 may commence retrieving the event(s) 404 within the parallel event queue(s) 502. As described previously, the event(s) 504 within the parallel event queue(s) 502 may be processed concurrently. Continuing further, the DES 218 is launched in the selected core 304. With the parallel event queue(s) 502 allocated to the DES 218 to be processed within the selected core 304, the DES 218 may retrieve an event, say event 504-1, from the parallel event queue(s) 502.

Considering that the parallel event queue(s) 502 is a parallel queue, the other event(s) 504 may be retrieved and processed concurrently by the CES 216. In such a case, the CES 216 may retrieve other events from the parallel event queue(s) 502 depending on a processing context. The processing context, in an instance, may depend on the application or an operation to which any given event from amongst the event(s) 504 may correspond to. For example, the event 504-1 once retrieved from the parallel event queue(s) 502 will be processed by the DES 218 on the selected core 304. In a similar manner, the event 504-2 may be retrieved by the CES 216 for processing on the active core 506, thereby implementing a concurrent or parallel processing of the event(s) 504. It may be noted that the parallel event queue(s) 502 which are being managed by the CES 216 may be said to be present within the scope or within the context of the CES 216. When the event 504-1 is transferred or offloaded onto the selected core 304, the CES 216 is to transfer the event 504-1 to the scope or the context of the DES 218, for further processing.

While the event 504-1 is being processed, the DES 218 may monitor the processing of the event 504-1, while the CES 216 may proceed with the processing of the event 504-2. Once event 504-1 has been processed, the DES 218 may retrieve any other event from the parallel event queue(s) 502, for processing. This process may continue till the event(s) 404 within the parallel event queue(s) 502 have been processed or till a termination condition is detected. At this stage, the DES 218 may be terminated and the scope of the parallel event queue(s) 502 may be passed back to the CES 216.

The above examples have been explained in relation to the CES 216 launching a single instance of the DES 218 on the selected core 304. It may be noted that the CES 216 may also launch multiple instances of DES 218 simultaneously to each process separate parallel event queue(s) 502. Such examples too would fall within the scope of the present subject matter.

As discussed above, events initially scheduled for being processed by the CES 216 may be offloaded to a DES 218. The above concepts have been discussed generally in relation to handling of events, and when events are within an atomic queue or a parallel queue. The following examples adopts similar approaches for addressing requirements pertaining to an application architecture. As mentioned previously, the events may be generated as a result of the execution of an application. One or more operations to be performed by the application may be implemented through events. Such events (or other linked events) may be further grouped into event queues, which may be hierarchically linked to form a node or a branch set. In an example, one of such branch sets may be offloaded to a distributed event scheduler (such as the DES 218), for processing. The offloading of such a branch set would entail that the ownership of all hierarchically linked event queues and constituent events is also offloaded onto the launched distributed event scheduler. The launched distributed event scheduler may be similar to the DES 218 discussed in conjunction with FIG. 2.

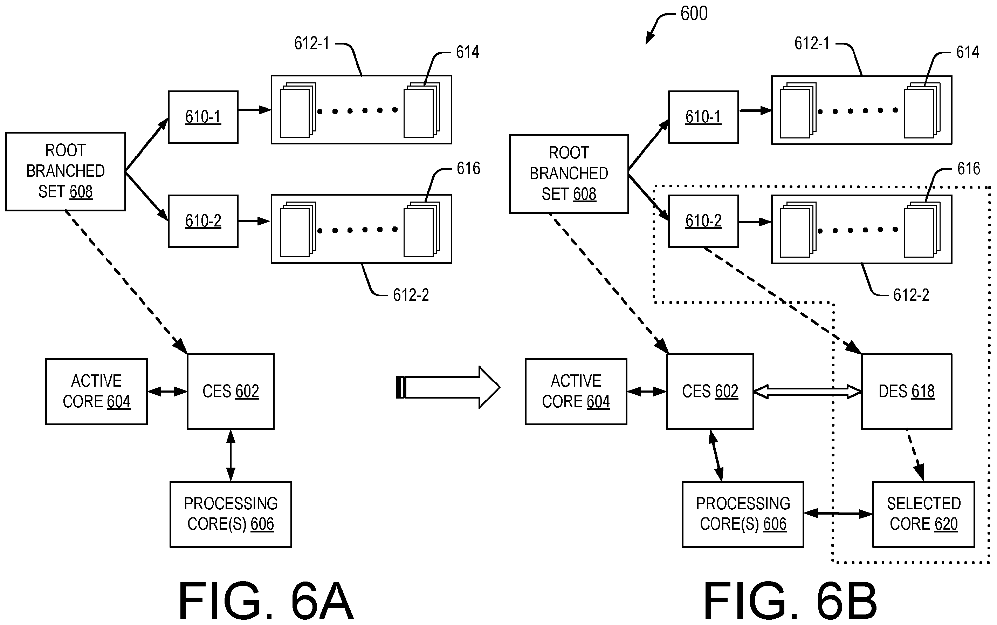

These aspects are further discussed in conjunction with FIGS. 6A-6B. FIGS. 6A-6B illustrates an environment 600 depicting a centralized event scheduler 602 (i.e., CES 602). The CES 602 is similar to the CES 216 as discussed in conjunction with the preceding figures. As depicted, the CES 602 may use an active core 604, which may be selected from the pool of processing core(s) 606. In operation, the CES 602 may handle the processing of a root branched set 608. The root branched set 608 may further include a first branch set 610-1 and a second branch set 610-2. The root branched set 608 may correspond to certain operations with the first branch set 610-1 and the second branch set 610-2 corresponding to other sub-steps or other operations, which in turn may be part of the operation to which the root branched set 608 may correspond to. Although depicted as comprising only the first branch set 610-1 and the second branch set 610-2, the root branched set 608 may include multiple other branch sets. Such implementations are just other examples of the present subject matter.

The first branch set 610-1 and the second branch set 610-2 may further include respective sets of queues. For example, the first branch set 610-1 may include a first queue set 612-1 and the second branch set 610-2 may include a second queue set 612-2. The queue sets, such as the first queue set 612-1 and the second queue set 612-2, may correspond to a pipeline of event processing.

It may be noted that other queue sets may also be present without deviating from the scope of the present subject matter. Continuing further, the first queue set 612-1 and the second queue set 612-2 may further include plurality of queue(s) 614 and 616, respectively. The first queue set 612-1 and the second queue set 612-2 may be hierarchically linked with the first branch set 610-1 and the second branch set 610-2, respectively. The association between the branch sets and their respective queue sets may be dependent on the architecture of an application based on an event pipeline. The event pipeline, in turn, may represent or depend on a structured flow and processing of events. The flow of such events may depend on the application. It may be noted that the example illustrated in FIGS. 6A-6B is only indicative of one such architecture and should not be construed as limiting the scope of the claimed subject matter.

In operation, the CES 602 may monitor the root branched set 608, i.e., including the first branch set 610-1 and the second branch set 610-2. Initially, the CES 602 may be scheduling and processing the first branch set 610-1 and the second branch set 610-2 (including its constituent event queue sets and event queues) on the active core 604. The CES 602, thereafter, may launch the DES 618 on a selected core 620 (as shown in FIG. 6B). Similar to the examples discussed previously, the CES 602 may identify the selected core 620 from amongst the pool of processing core(s) 606. The selected core 620 may be identified using a list of available processing cores, available as the resource information 224, as per an example.

Based on the monitoring of the root branched set 608, the CES 602 may determine to transfer or offload one of the branch sets to the DES 618. Such a determination may be based on a variety of conditions. For example, the CES 602 may determine the second branch set 610-2 to be offloaded onto the DES 618 based on the number of event queues that may be present in the second queue set 612-2. Other example conditions, basis which the CES 602 may determine to offload the second branch set 610-2 onto the DES 618 may include, but is not limited to, number of total events present in the first branch set 610-1 and the second branch set 610-2 or based on specific branch sets which may be representing a defined pipeline of event processing. It may be noted that the defined pipeline may represent one or more application conditions.

Once offloaded, the second branch set 610-2 and the second queue set 612-2 is processed by the DES 618 on the selected core 620. To this end, the DES 618 may go through the second queue set 612-2 (which is hierarchically linked to the second branch set 610-2) to retrieve the event queues 616 (which are part of the second queue set 612-2). The event queues 616 and their corresponding events (not shown in FIG. 6B) may thereafter be processed on the selected core 620, by the DES 618.

Similar to the approaches as discussed in conjunction with the previous figures, the DES 618 may continue to process the event queue(s) present within the second queue set 612-2. Once all events are processed or in instances where a specified termination condition is met, the DES 618 may be terminated. Accordingly, the processing scope may be transferred back again to the CES 602. In an example, once the DES 618 is terminated, with the selected core 620 being returned back to the pool of processing core(s) 606.

Although the present example describes offloading the second branch set 610-2 onto the DES 618, any other branch set may be offloaded without deviating from the scope of the present subject matter. Furthermore, the CES 602 may launch a number of distributed event schedulers (similar to the DES 618) for offloading and processing any number of branch sets. Such examples would continue to be present within the scope of the present subject matter. In an example, the DES 618 may operate as an autonomous scheduler for the branch sets it may be handling. In such a case, the DES 618 may further launch one or more other subordinate distributed event schedulers for handling other hierarchically linked event queues.

The offloading of branch sets in the manner described above, parallelizes the scheduling of multiple branch sets. Such approaches may be adopted even in cases where an application pipeline is complex, and where low latency scheduling may be challenging with a single scheduler (such as the CES 602). Parallelization and offloading one or more branch sets (such as the second branch set 610-2) would enable low latency processing. In this manner, a high load condition may be managed wherein which the CES 602 implements scheduling using the DES 618, dynamically.

The above approaches may also be leveraged for different system architecture. For example, a system on which the application may be executed may include multiple processor nodes. A processor node may be considered as a grouping of multiple processors or processor cores. Such grouping of processors may be associated with a pool of memory resources that are commonly accessible by the grouping of processors. An example of such a processor node where includes but is not limited to a non-uniform memory access (NUMA) node. These examples would also be applicable for other type of processor nodes without any limitations. Another example of a processor node may include a processor tile.

A centralized event scheduler (such as the CES 702) may be executing on a node(s). Scheduling of events by the scheduler may generally involve scheduling events on the available core(s) within the given node. If the events have been scheduled on all available cores, the centralized event scheduler may subsequently schedule other events on the available cores of another node (i.e., a node which is different from a native node on which the scheduler may be executing on). This, however, may entail the scheduler coordinating and managing the scheduling across an interconnect which communicatively couples the nodes. Such cross-interconnect coordination introduces latencies and impacts the processing of events that may have been scheduled on the other nodes. To summarize, any local scheduling undertaken by scheduler exhibits low latency; however, cross-interconnect scheduling by the scheduler increases latency.

The above challenges are overcome by the approaches described previously, wherein which the scheduler may launch a distributed event scheduler on the other remote node, for scheduling and processing events. Such scheduling through the distributed event scheduler on the other remote reduces latency since all subsequent scheduling (undertaken by the distributed scheduler) is effectively.

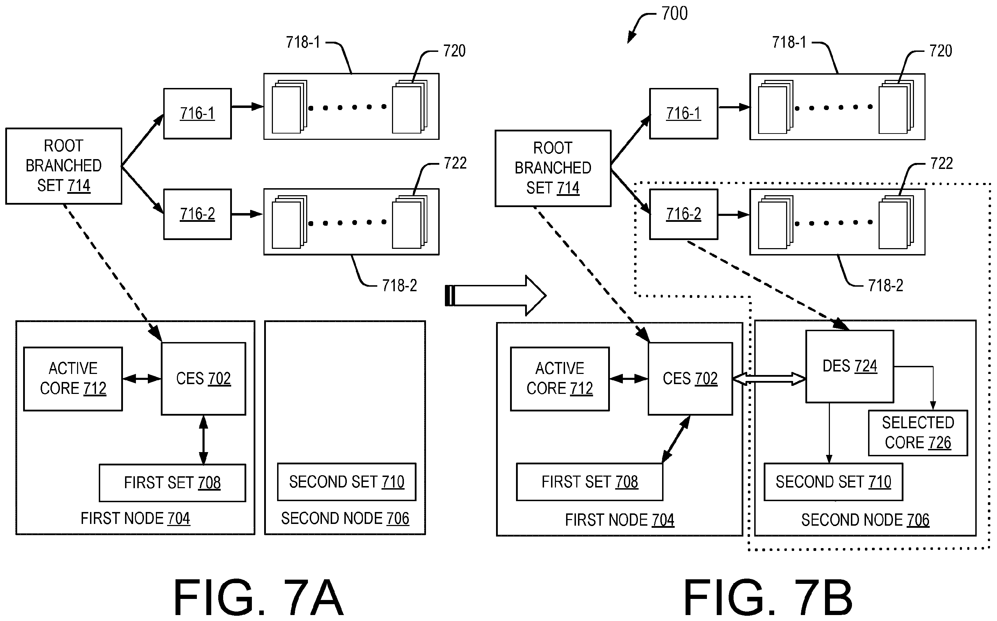

These aspects are discussed in conjunction with FIGS. 7A-7B. FIGS. 7A-7B illustrates a host system 700. The host system 700 may be any system which is to implement and execute an event pipeline corresponding to an application. The host system 700 may implement a centralized event scheduler 702 (i.e., CES 702). In an example, the host system 700 further comprises a first processor node 704 and a second processor node 706. The first processor node 704 (referred to as the first node 704) and the second processor node 706 (referred to as the second node 706) may each include their corresponding set of processing core(s), referred to as the first set 708 and a second set 710. It may be noted that although the host system 700 is depicted as including the first node 704 and the second node 706, the same should not be construed as a limitation. The host system 700 may include a plurality of other processor nodes without limiting the scope of the claimed subject matter.

The CES 702 implemented within the host system 700 is to execute within the first node 704. The first node 704 thus is native to the CES 702, with the second node 706 being a remote node when considered with respect to the first node 704. The CES 702 may be similar to the CES 602 or the CES 216, as discussed previously in conjunction with the preceding figures. The CES 702 may use an active core 712 which may be selected from the first set 708.

Similar to the examples discussed in conjunction with FIG. 6, the CES 702 may be handling the processing of a root branched set 714. The root branched set 714 may further include a first branch set 716-1 and a second branch set 716-2. The root branched set 714 may correspond to certain operations with the first branch set 716-1 and the second branch set 716-2 corresponding to other sub-steps or other operations, which may be part of the operation to which the root branched set 714 may correspond to. Although depicted as comprising only the first branch set 716-1 and the second branch set 716-2, the root branched set 714 may include multiple other branch sets. Such implementations are just other examples of the present subject matter.

The first branch set 716-1 and the second branch set 716-2 may further include respective sets of queues. For example, the first branch set 716-1 may include a first queue set 718-1 and the second branch set 716-2 may include a second queue set 718-2. The queue sets, such as the first queue set 718-1 and the second queue set 718-2, may correspond to a pipeline of event processing. It may be noted that other queue sets may also be present without deviating from the scope of the present subject matter.

Continuing further, the first queue set 718-1 and the second queue set 718-2 may further include plurality of queue(s) 720 and 722, respectively. The first queue set 718-1 and the second queue set 718-2 may be hierarchically linked with the first branch set 716-1 and the second branch set 716-2, respectively. The association between the branch sets and their respective queue sets may be dependent on the architecture of an application based on an event pipeline. The event pipeline, in turn, may represent or depend on a structured flow and processing of events. The flow of such events may depend on the application. It may be noted that the example illustrated in FIGS. 7A-7B is only indicative of one such architecture and should not be construed as limiting the scope of the claimed subject matter.

In operation, the CES 702 running on the active core 712 of the first node 704, may monitor the root branched set 714, i.e., along with the first branch set 716-1 and the second branch set 716-2. The active core 712 may be selected from the first set 708. Initially, the CES 702 may be scheduling and processing the first branch set 716-1 and the second branch set 716-2 (including its constituent event queue sets and event queues) on the active core 712 within the first node 704. The CES 702 may, thereafter, launch a distributed event scheduler, i.e., DES 724 on a selected core 726 within the second node 706 (as shown in FIG. 7B). It may be noted that the selected core 726 may be determined from the second set 710. Similar to the examples discussed previously, the selected core 726 may be identified using a list of available processing cores, for example, available as the resource information 224.

Based on the monitoring of the root branched set 714, the CES 702 may determine to transfer or offload one of the branch sets to the DES 724. Such a determination may be based on a variety of conditions. For example, the CES 702 may determine the second branch set 716-2 to be offloaded onto the DES 724 based on the number of event queues that may be present in the second queue set 718-2. Other example conditions, basis which the CES 702 may determine to offload the second branch set 716-2 onto the DES 724 may include, but is not limited to, number of total events present in the first branch set 716-1 and the second branch set 716-2 or based on specific branch sets which may be representing a defined pipeline of event processing. It may be noted that the defined pipeline may represent one or more application conditions.

Once offloaded onto the DES 724 (onto the second node 706), the second branch set 716-2 may be processed by the DES 724 on the selected core 726. To this end, the DES 724 may go through the second queue set 718-2 (which is hierarchically linked to the second branch set 716-2) and retrieve the event queues 722 (which are part of the second queue set 718-2). The event queues 722 and their corresponding events (not shown in FIG. 7B) may thereafter be processed on the selected core 726 within the second node 706, which is remote to the first node 704 (i.e., the node native to the CES 702), by the DES 724.

The DES 724 may continue to process the event queue(s) present within the second queue set 718-2. Once all events are processed or in instances where a specified termination condition is met, the DES 724 may be terminated. Accordingly, the processing scope may be transferred back again to the CES 702. In an example, once the DES 724 is terminated, with the selected core 726 being returned back to the second set 710.

Although the present example describes offloading the second branch set 716-2 onto the DES 724, any other branch set may be offloaded without deviating from the scope of the present subject matter. In a similar manner, the CES 702 may also launch other distributed event schedulers on any other processor nodes that may be present within the host system 700. Furthermore, the CES 702 may launch a number of distributed event schedulers (similar to the DES 724) for offloading and processing any number of branch sets. Such examples would continue to be present within the scope of the present subject matter.

The offloading of branch sets in the manner described above, parallelizes the scheduling of multiple branch sets on other processor nodes of a host system. Such approaches may be adopted even in cases where an application pipeline is complex, and where low latency scheduling may be challenging with a single scheduler (such as the CES 702). It may be noted that the present scheduling mechanism involving launching the DES 724 on the second node 706, would involve cross-interconnect scheduling latency since the second node 706 is remote to the second node 706. Despite the same, any cross-interconnect impact is minimal and occurs only when launching the DES 724 on the second node 706. Thereafter, every subsequent scheduling of the second branch set 716-2 on second node 706 is fast with low latency since the subsequent scheduling will be within the local node (i.e., local with respect to the DES 724).

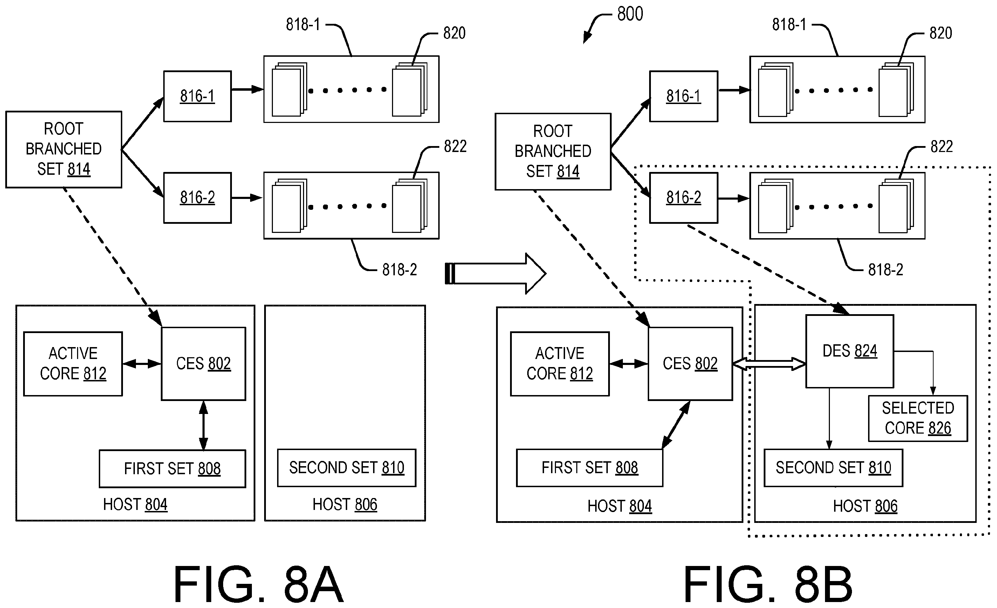

The approaches as discussed in conjunction with FIG. 7A-7B, may also be applicable in instances involving multiple host systems (such as the host system 700). These aspects are discussed in conjunction with FIGS. 8A-8B, which illustrates environment 800 implementing a centralized event scheduler 802 on a first host system 804. The first host system 804 (referred to as host 804) may be any system which is to implement and execute an event pipeline corresponding to an application. As will be further explained, the CES 802 is to launch a distributed event scheduler on a second host system 806 (referred to as host 806).

The host 804 and the host 806 may each include their corresponding set of processing core(s), referred to as the first set 808 and a second set 810. The CES 802 is implemented and executes within the host 804. The host 804 thus is native to the CES 802, with the host 806 being a remote host when considered with respect to the host 804. The CES 802 may be similar to the CES 702, CES 602 or the CES 216, as discussed previously in conjunction with the preceding figures. The CES 802 may use an active core 812 which may be selected from the first set 808.

Similar to the examples discussed in conjunction with FIGS. 6-7, the CES 802 may be handling the processing of a root branched set 814. The root branched set 814 may further include a first branch set 816-1 and a second branch set 816-2. The root branched set 814 may correspond to certain operations with the first branch set 816-1 and the second branch set 816-2 corresponding to other sub-steps or other operations, which may be part of the operation to which the root branched set 814 may correspond to. Although depicted as comprising only the first branch set 816-1 and the second branch set 816-2, the root branched set 814 may include multiple other branch sets. Such implementations are just other examples of the present subject matter.

The first branch set 816-1 and the second branch set 816-2 may further include respective sets of queues. For example, the first branch set 816-1 may include a first queue set 818-1 and the second branch set 816-2 may include a second queue set 818-2. The queue sets, such as the first queue set 818-1 and the second queue set 818-2, may correspond to a pipeline of event processing. It may be noted that other queue sets may also be present without deviating from the scope of the present subject matter.

Continuing further, the first queue set 818-1 and the second queue set 818-2 may further include plurality of queue(s) 820 and 822, respectively. The first queue set 818-1 and the second queue set 818-2 may be hierarchically linked with the first branch set 816-1 and the second branch set 816-2, respectively. Similar to the examples discussed previously, the association between the branch sets and their respective queue sets may be dependent on the architecture of an application based on an event pipeline. The event pipeline, in turn, may represent or depend on a structured flow and processing of events. The flow of such events may depend on the application. It may be noted that the example illustrated in FIGS. 8A-8B is only indicative of one such architecture and should not be construed as limiting the scope of the claimed subject matter.

In operation, the CES 802 running on the active core 812 of the host 804, may monitor the root branched set 814, i.e., including the first branch set 816-1 and the second branch set 816-2. The active core 812 may be selected from the first set 808. Initially, the CES 802 may be scheduling and processing the first branch set 816-1 and the second branch set 816-2 (including its constituent event queue sets and event queues) on the active core 812 within the host 804. The CES 802 may, thereafter, launch a distributed event scheduler, i.e., DES 824 on a selected core 826 within the host 806 (as shown in FIG. 8B). It may be noted that the selected core 826 may be determined from the second set 810. Similar to the examples discussed previously, the selected core 826 may be identified using a list of available processing cores, for example, available as the resource information 224. In an example, the list of processing cores within the host 806 may be available within a shared memory resource, available to both host 804 and host 806.

Returning to the present example, the CES 802 may determine to transfer or offload one of the branch sets to the DES 824. Such a determination may be based on a variety of conditions. For example, the CES 802 may determine the second branch set 816-2 to be offloaded onto the DES 824 based on the number of event queues that may be present in the second queue set 818-2. Other example conditions, basis which the CES 802 may determine to offload the second branch set 816-2 onto the DES 824 may include, but is not limited to, number of total events present in the first branch set 816-1 and the second branch set 816-2 or based on specific branch sets which may be representing a defined pipeline of event processing. It may be noted that the defined pipeline may represent one or more application conditions.

Once offloaded onto the DES 824 (present within the host 806), the second branch set 816-2 may be processed by the DES 824 on the selected core 826. To this end, the DES 824 may go through the second queue set 818-2 (which is hierarchically linked to the second branch set 816-2) and retrieve the event queues 822 (which are part of the second queue set 818-2). The event queues 822 and their corresponding events (not shown in FIG. 8B) may thereafter be processed on the selected core 826 within the host 806, which is remote to the host 804 (i.e., the host native to the CES 802), by the DES 824.

The DES 824 may continue to process the event queue(s) present within the second queue set 818-2. Once all events are processed or in instances where a specified termination condition is met, the DES 824 may be terminated. Accordingly, the processing scope may be transferred back again to the CES 802. In an example, once the DES 824 is terminated, with the selected core 826 being returned back to the second set 810.

Although the present example describes offloading the second branch set 816-2 onto the DES 824, any other branch set may be offloaded without deviating from the scope of the present subject matter. In a similar manner, the CES 802 may also launch other distributed event schedulers on any other host systems. Furthermore, the CES 802 may launch a number of distributed event schedulers (similar to the DES 824) for offloading and processing any number of branch sets. Such examples would continue to be present within the scope of the present subject matter.

The different use cases as discussed may be used in combination with each other. Such examples follow corresponding approaches that have been described in relation to the different use cases. Such examples have not been recited for avoiding any repetition; however, these examples too would fall within the scope of the accompanying claims.

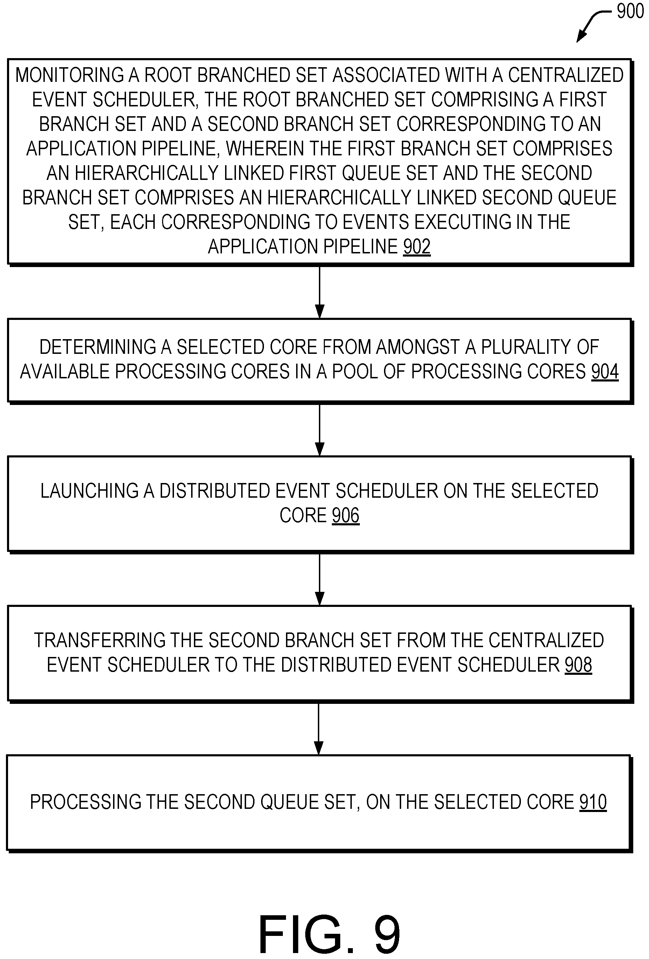

FIGS. 9-14 illustrate various example methods for scheduling events in an event queue through a distributed event scheduler, in accordance with examples of the present subject matter. Although these example methods may be implemented in a variety of devices, for the ease of explanation, the description of these methods is provided in reference to the above-described system 102 or system 202. The order in which the methods are described is not intended to be construed as a limitation, and any number of the described method blocks may be combined in any order to implement the methods or an alternative method.

It may be understood that blocks of the methods may be performed by the system 102. The blocks of the methods may be executed based on instructions stored in a non-transitory computer-readable medium, as will be readily understood. The non-transitory computer-readable medium may comprise, for example, digital memories, magnetic storage media, such as magnetic disks and magnetic tapes, hard drives, or optically readable digital data storage media.

FIG. 9 depicts an example method 900 for scheduling events in an event queue through a distributed event scheduler. At block 902, a root branched set associated with a centralized event scheduler may be monitored. In an example, the root branched set comprises a first branch set, and a second branch set corresponding to an application pipeline. The first branch set comprises a hierarchically linked first queue set and the second branch set comprises a hierarchically linked second queue set, each corresponding to events executing in the application pipeline. For example, the CES 602 may monitor the root branched set 608, i.e., including the first branch set 610-1 and the second branch set 610-2. Initially, the CES 602 may be scheduling and processing the first branch set 610-1 and the second branch set 610-2 (including its constituent event queue sets and event queues) on the active core 604 (as depicted in FIGS. 6A-6B).

At block 904, a selected core from amongst a plurality of available processing cores in a pool of processing cores may be determined. For example, the CES 602 may identify a selected core 620 from amongst the pool of processing core(s) 606. In an example, the selected core 620 may be identified using a list of available processing cores, available as the resource information 224.

At block 906, a distributed event scheduler on the selected core may be launched, by the centralized event scheduler. For example, the CES 602, may launch the DES 618 on a selected core 620 (as shown in FIG. 6B).

At block 908, the second branch set may be offloaded or transferred from the centralized event scheduler to the distributed event scheduler. For example, the CES 602 may determine to transfer or offload one of the branch sets to the DES 618. Such a determination may be based on a variety of conditions. In an example, the CES 602 may determine the second branch set 610-2 to be offloaded onto the DES 618 based on the number of event queues that may be present in the second queue set 612-2. Once offloaded, the second branch set 610-2 and the second queue set 612-2 is processed by the DES 618 on the selected core 620. Other example conditions, basis which the CES 602 may determine to offload the second branch set 610-2 onto the DES 618 may include, but is not limited to, number of total events present in the first branch set 610-1 and the second branch set 610-2 or based on specific branch sets which may be representing a defined pipeline of event processing. It may be noted that the defined pipeline may represent one or more application conditions.

At block 910, the second queue set may be processed on the selected core. For example, the DES 618 may go through the second queue set 612-2 (which is hierarchically linked to the second branch set 610-2) and retrieve the event queues 616 (which are part of the second queue set 612-2). The event queues 616 and their corresponding events (not shown in FIG. 6B) may thereafter be processed on the selected core 620.

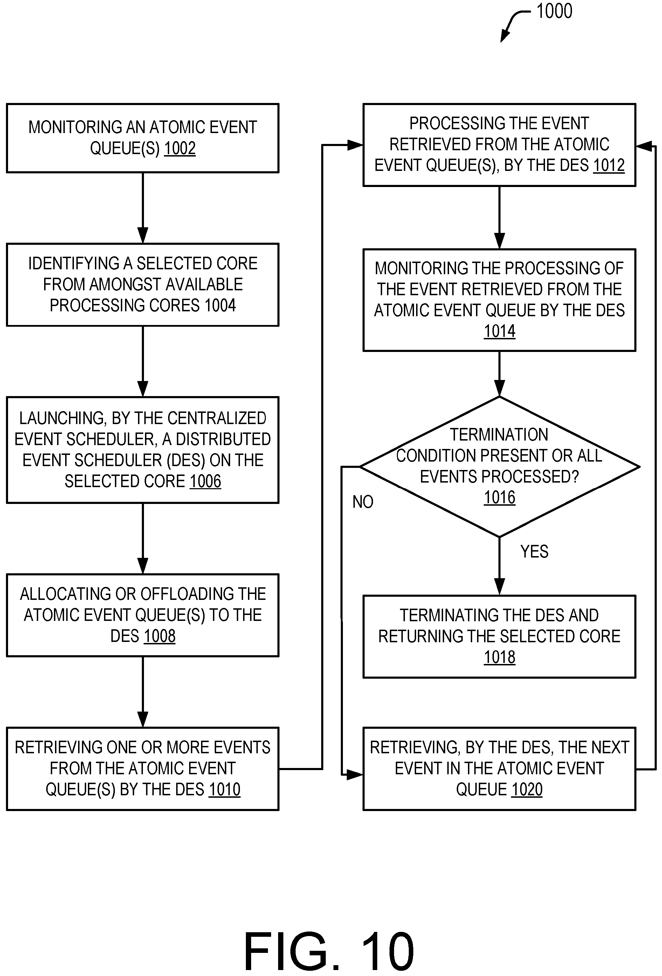

FIG. 10 depicts an example method 1000 for scheduling events in an atomic event queue, through a distributed event scheduler. At block 1002, an atomic event queue(s) may be monitored. As explained previously, an atomic event queue(s) may be considered as an event queue in which a new event may only be started when the previous event from that queue has finished or has been processed. In an example, the centralized event scheduler 214, i.e., the CES 216 may monitor the atomic event queue(s) 402. The CES 216 may monitor the atomic event queue(s) 402 to detect whether any 'burst' of events have occurred.

At block 1004, a selected core is identified from amongst the processing cores which may be available. For example, the CES 216 may identify a selected core 304 from amongst one of the processing core(s) 228 which were determined to be available. In an example, the available processing cores may be identified based on a list of available cores. In another example, information pertaining to the available processing cores may be determined based on resource information 224.

At block 1006, the centralized event scheduler may launch a distributed event scheduler on the selected core. For example, the CES 216 may launch the DES 218 on the selected core 304 (i.e., one of the processing core(s) 228 which were determined to be available). In an example, the DES 218 may be launched or initiated as an event on the selected core 304. The DES 218 may be initiated by the CES 216 as a function call. Once the function call is made, the CES 216 may provide the scope and context (e.g., pertaining to the application to which the event queue(s) may pertain to) to the DES 218.

At block 1008, the atomic event queue(s) may be allocated to the distributed event scheduler. For example, once the DES 218 is launched on the selected core 304, the CES 216 may allocate or transfer the atomic event queue(s) 402 to the DES 218.

At block 1010, the distributed event scheduler may commence retrieving one or more events from the atomic event queue(s). For example, with the atomic event queue(s) 402 allocated to the DES 218, the DES 218 may commence retrieving the event(s) 404 from the atomic event queue(s) 402. These aspects are further explained in the context of one or more event(s) 404-1, 2,..n, N (collectively referred to as the event(s) 404) within the atomic event queue(s) 402. To this end, the DES 218 may retrieve an event, say event 404-1, from the atomic event queue(s) 402.

At block 1012, the distributed event scheduler may process the event retrieved from the atomic event queue(s). For example, the DES 218 processes the event 404-1 retrieved from the atomic event queue(s) 402 on the selected core 304.

At block 1014, the distributed event scheduler may monitor the processing of the event retrieved from the atomic event queue. For example, while the event 404-1 is being processed, the DES 218 may monitor the processing of the event 404-1.

At block 1016, presence of a termination condition may be ascertained. For example, the DES 218 may determine whether any termination condition has been specified with the atomic event queue(s) 402. Examples of such termination conditions include, but is not limited to, predefined threshold time window, the type of event(s), and such. If the DES 218 determines that a specified termination condition is present and has been met ('Yes' path from block 1016), the DES 218 may be terminated and the selected core 304 may be returned to the pool of processing core(s) 228 (at block 1018).

If the termination condition has not been met or that no termination condition had bene specified ('No' path from block 1016), the method may proceed to block 1020. At block 1020, the next event in the atomic event queue may be retrieved. For example, once the event 404-1 has been processed, the DES 218 may retrieve the next event, i.e., event 404-2, from the atomic event queue(s) 402. This process may continue (with the method 1000 looping back to block 1012), till the event(s) 404 within the atomic event queue(s) 402 have been processed and that no other event(s) are present in the atomic event queue(s) 402. At this stage, the DES 218 may be terminated (e.g., at block 1018).

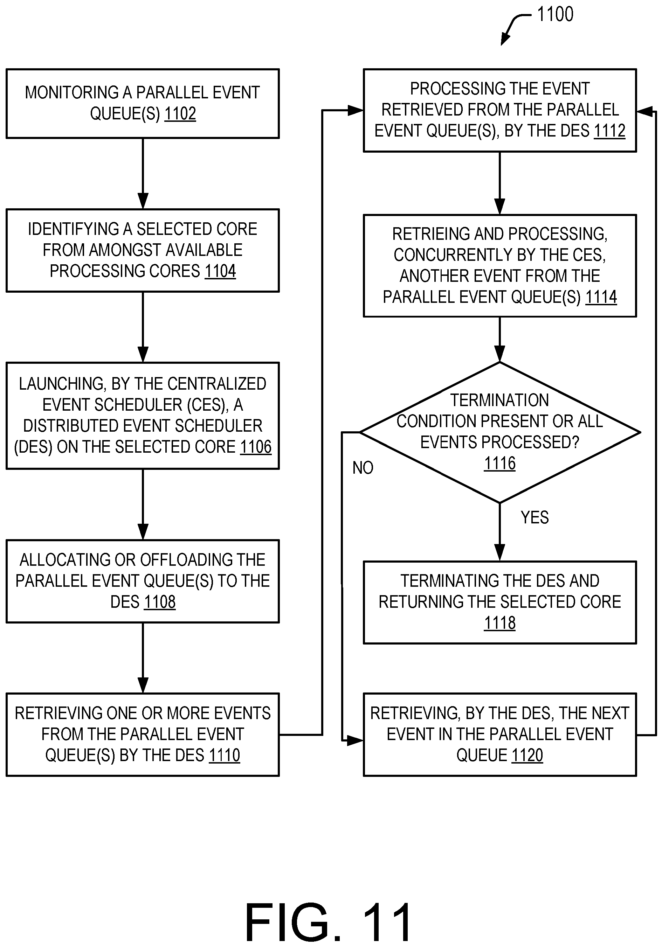

FIG. 11 depicts an example method 1100 for scheduling events in a parallel event queue, through a distributed event scheduler. As described previously, a parallel queue is such that a new event may be retrieved for processing before any one or more previous event from that queue have finished or executed and processed. At block 1102, the parallel event queue(s) may be monitored. For example, the CES 216 may monitor the parallel event queue(s) 502. The CES 216 may be executing on a previous processing core, referred to as the active core 506.

At block 1104, a selected core is identified from amongst the processing cores which may be available. For example, the CES 216 may identify a selected core 304 from amongst one of the processing core(s) 228 which were determined to be available. In an example, the available processing cores may be identified based on a list of available cores. In another example, information pertaining to the available processing cores may be determined based on resource information 224.

At block 1106, the centralized event scheduler may launch a distributed event scheduler on the selected core. For example, the CES 216 may launch the DES 218 on the selected core 304 (i.e., one of the processing core(s) 228 which were determined to be available). In an example, the DES 218 may be launched or initiated as an event on the selected core 304. The DES 218 may be initiated by the CES 216 as a function call.

At block 1108, the parallel event queue(s) may be allocated to the distributed event scheduler. For example, once the DES 218 is launched on the selected core 304, the CES 216 may allocate or transfer the parallel event queue(s) 502 to the DES 218.

At block 1110, the distributed event scheduler may commence retrieving one or more events from the parallel event queue(s). For example, with the parallel event queue(s) 502 allocated to the DES 218 to be processed within the selected core 304, the DES 218 may retrieve an event, say event 504-1, from the parallel event queue(s) 502.

At block 1112, the retrieved event may be processed on the selected core. For example, the event 504-1 once retrieved from the parallel event queue(s) 502 will be processed by the DES 218 on the selected core 304.

At block 1114, other event(s) from the parallel event queue(s) may be retrieved and processed concurrently by the centralized event scheduler. For example, in parallel to the DES 218 processing the event 504-1, the CES 216 may retrieve the other event(s) 504 for processing. In such a case, the event 504-2 may be retrieved by the CES 216 for processing on the active core 506, thereby implementing a concurrent or parallel processing of the event(s) 504.

At block 1116, the distributed event scheduler may ascertain whether all events have been processed or whether a termination condition has been met. For example, the DES 218 may check and determine whether any specified termination condition has been met or whether all events in the parallel event queue(s) 502 have been processed. On determining either of these criteria to have been met (the 'Yes' path from block 1116), the method 1100 may proceed to block 1118, where the DES 218 may be terminated and the selected core 304 may be returned to the processing core(s) 228.

If neither of these criteria (i.e., the criteria as specified in block 1116) has been met ('No' path from block 1116), the method 1100 may proceed to block 1120 where the DES 218 may retrieve another event from the parallel event queue(s) 502, for processing. At this stage, the method may loop back to block 1112, wherein which such other event may be scheduled and processed by the DES 218.

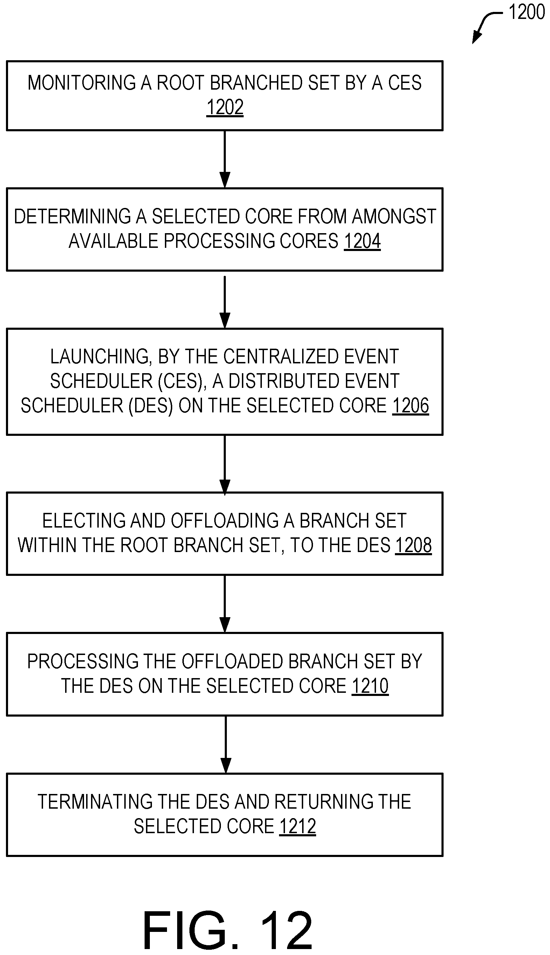

FIG. 12 depicts an example method 1200 for scheduling branch sets, through a distributed event scheduler. As described previously, these examples adopt similar approaches for addressing requirements pertaining to an application architecture. As mentioned previously, the events (or other linked events) may be further grouped into event queues, which may be hierarchically linked to form a branch set. In an example, one of such branch sets may be offloaded to a distributed event scheduler (such as the DES 218), for processing. Once offloaded, the ownership of all hierarchically linked event queues and constituent events within the branch set is also offloaded onto the launched distributed event scheduler.

At block 1202, a root branched set may be monitored by a centralized event scheduler. For example, the CES 602 may be monitoring and handling the processing of a root branched set 608, on an active core 604, with the root branched set 608 including the first branch set 610-1 and the second branch set 610-2. As discussed in conjunction with FIGS. 6A-6B, the root branched set 608 may further include a first branch set 610-1 and a second branch set 610-2. The root branched set 608 may correspond to certain operations, with the first branch set 610-1 and the second branch set 610-2 corresponding to other sub-steps or other operations, which may be part of the operation to which the root branched set 608 may correspond to. The first branch set 610-1 may include a first queue set 612-1 and the second branch set 610-2 may include a second queue set 612-2. The queue sets, such as the first queue set 612-1 and the second queue set 612-2, may correspond to a pipeline of event processing. The first queue set 612-1 and the second queue set 612-2 may further include plurality of queue(s) 614 and 616, respectively. The first queue set 612-1 and the second queue set 612-2 may be hierarchically linked with the first branch set 610-1 and the second branch set 610-2, respectively.

At block 1204, a selected core from amongst of pool of processing core(s) may be determined. For example, the CES 602 may identify the selected core 620 from amongst the pool of processing core(s) 606. The selected core 620 may be identified using a list of available processing cores, available as the resource information 224, as per an example.

At block 1206, a distributed event scheduler may be launched on the selected core. For example, the CES 602, thereafter, may launch the DES 618 on a selected core 620 (as shown in FIG. 6B).

At block 1208, one of the branch sets within the root branched set may be elected for transfer or offload to the distributed event scheduler. For example, based on the monitoring of the root branched set 608, the CES 602 may determine to transfer or offload one of the branch sets to the DES 618. Such a determination may be based on a variety of conditions. For example, the CES 602 may determine the second branch set 610-2 to be offloaded onto the DES 618 based on the number of event queues that may be present in the second queue set 612-2. Other example conditions, basis which the CES 602 may determine to offload the second branch set 610-2 onto the DES 618 may include, but is not limited to, number of total events present in the first branch set 610-1 and the second branch set 610-2 or based on specific branch sets which may be representing a defined pipeline of event processing. It may be noted that the defined pipeline may represent one or more application conditions.

At block 1210, the offloaded branch set is processed by the distributed event scheduler on the selected core. For example, the second branch set 610-2 and its corresponding second queue set 612-2 is processed by the DES 618 on the selected core 620. To this end, the DES 618 may go through the second queue set 612-2 (which is hierarchically linked to the second branch set 610-2) and retrieve the event queues 616 (which are part of the second queue set 612-2). The event queues 616 and their corresponding events (not shown in FIG. 6B) may thereafter be processed on the selected core 620, by the DES 618.

At block 1212, the distributed event scheduler may be terminated on completion of processing of all events in the offloaded branch set or in case a termination condition is met. For example, the DES 618 may be terminated once all events are processed or in cases where a specified termination condition is met, the DES 618 may be terminated. Accordingly, the processing scope may be transferred back again to the CES 602. In an example, once the DES 618 is terminated, with the selected core 620 being returned back to the pool of processing core(s) 606.

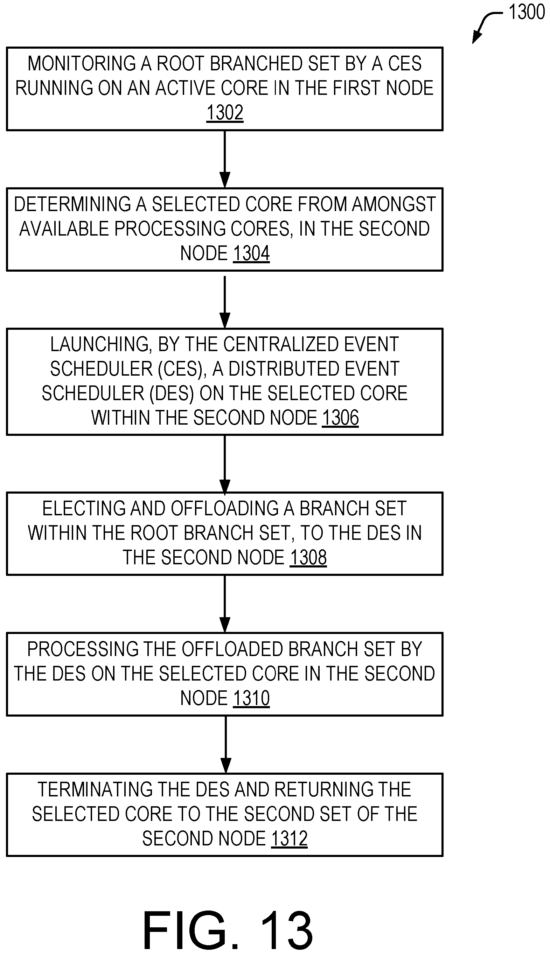

FIG. 13 depicts an example method 1300 for scheduling branch sets across one or more processor nodes, through a distributed event scheduler. As described previously, a centralized event scheduler (such as the CES 702) may be executing on a processor node. A processor node, or a node, may be considered as a grouping of multiple processors or processor cores. The nodes may be implemented in a host system, such as the host system 700, with the CES 702 being implemented on one of the processor cores of the nodes, i.e., active core 712.

The present method is described in the context of the environment 700 as depicted in FIGS. 7A-7B. As described previously, the host system 700 further comprises a first processor node 704 and a second processor node 706. The first processor node 704 (referred to as the first node 704) and the second processor node 706 (referred to as the second node 706) may each include their corresponding set of processing core(s), referred to as the first set 708 and a second set 710. It may be noted that although the host system 700 is depicted as including the first node 704 and the second node 706, the same should not be construed as a limitation. The host system 700 may include a plurality of other processor nodes without limiting the scope of the claimed subject matter.

At block 1302, monitor a root branched set by a centralized event scheduler. For example, the CES 702 running on the active core 712 of the first node 704, may monitor the root branched set 714, i.e., along with the first branch set 716-1 and the second branch set 716-2. The active core 712 may be selected from the first set 708.

At block 1304, a selected core from amongst of pool of processing core(s) in the second node, may be determined. For example, the CES 702 may identify the selected core 726 from amongst the second set 710 within the second node 706. The selected core 726 may be identified using a list of available processing cores, available as the resource information 224, as per an example.

At block 1306, a distributed event scheduler may be launched on the selected core within the second node. For example, the CES 702 may, thereafter, launch a distributed event scheduler, i.e., DES 724 on a selected core 726 within the second node 706 (as shown in FIG. 7B). It may be noted that the selected core 726 may be determined from the second set 710.

At block 1308, one of the branch sets within the root branched set may be elected for transfer or offload to the distributed event scheduler. For example, based on the monitoring of the root branched set 714, the CES 702 may determine to transfer or offload one of the branch sets to the DES 724. Such a determination may be based on a variety of conditions. For example, the CES 702 may determine the second branch set 716-2 to be offloaded onto the DES 724 based on the number of event queues that may be present in the second queue set 718-2. Other example conditions, basis which the CES 702 may determine to offload the second branch set 716-2 onto the DES 724 may include, but is not limited to, number of total events present in the first branch set 716-1 and the second branch set 716-2 or based on specific branch sets which may be representing a defined pipeline of event processing. It may be noted that the defined pipeline may represent one or more application conditions.

At block 1310, the offloaded second branch set may be processed by the distributed event scheduler. For example, once offloaded onto the DES 724 (onto the second node 706), the second branch set 716-2 may be processed by the DES 724 on the selected core 726. To this end, the DES 724 may go through the second queue set 718-2 (which is hierarchically linked to the second branch set 716-2) and retrieve the event queues 722 (which are part of the second queue set 718-2). The event queues 722 and their corresponding events (not shown in FIG. 7B) may thereafter be processed on the selected core 726 within the second node 706, which is remote to the first node 704 (i.e., the node native to the CES 702), by the DES 724.

At block 1312, the distributed event scheduler may be terminated. For example, once all events are processed or in instances where a specified termination condition is met, the DES 724 may be terminated. Accordingly, the processing scope may be transferred back again to the CES 702. In an example, once the DES 724 is terminated, with the selected core 726 being returned back to the second set 710.

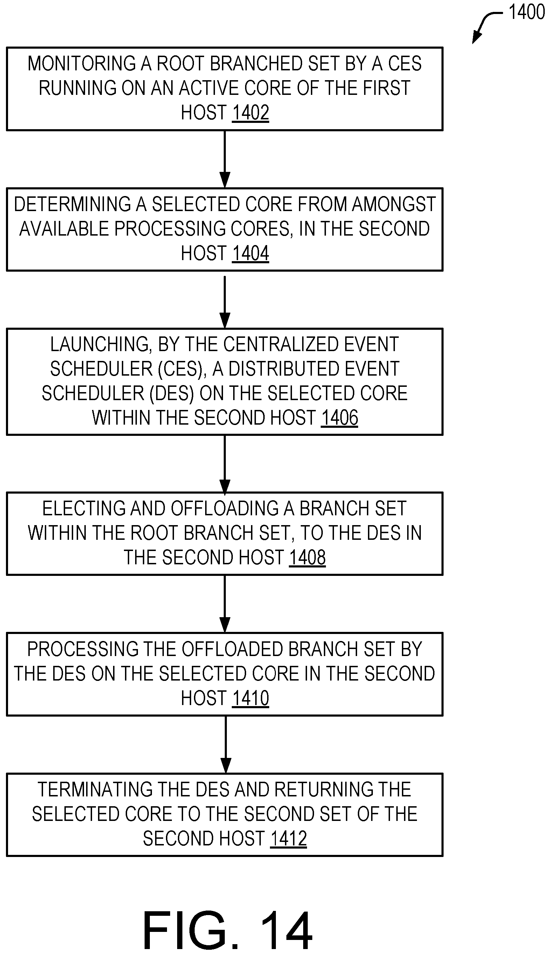

FIG. 14 depicts an example method 1400 for scheduling branch sets across different host systems, through a distributed event scheduler. The present example method is further explained in the context of environment described in FIG. 8A-8B, wherein which the environment 800 implements a centralized event scheduler 802 on a first host system 804. The first host system 804 (referred to as host 804) may be any system which is to implement and execute an event pipeline corresponding to an application. The CES 802 is implemented and executes within the host 804. As will be further explained, the CES 802 is to launch a distributed event scheduler on a second host system 806 (referred to as host 806). The host 804 and the host 806 may each include their corresponding set of processing core(s), referred to as the first set 808 and a second set 810. The CES 802 may use an active core 812 which may be selected from the first set 808.

At block 1402, monitor a root branched set by a centralized event scheduler. For example, the CES 802 running on the active core 812 of the host 804, may monitor the root branched set 814, i.e., including the first branch set 816-1 and the second branch set 816-2. The active core 812 may be selected from the first set 808. Initially, the CES 802 may be scheduling and processing the first branch set 816-1 and the second branch set 816-2 (including its constituent event queue sets and event queues) on the active core 812 within the host 804.

At block 1404, a selected core from amongst of pool of processing core(s) available on the second host, may be determined. For example, the CES 802 may identify the selected core 826 within the host 806 (as shown in FIG. 8B) from amongst the second set 810. Similar to the examples discussed previously, the selected core 826 may be identified using a list of available processing cores, for example, available as the resource information 224. In an example, the list of processing cores within the host 806 may be available within a shared memory resource, available to both host 804 and host 806.

At block 1406 a distributed event scheduler, may be launched on the selected core within the second node. For example, the CES 802 may, on identifying the selected core 826, launch a distributed event scheduler, i.e., DES 824 on the identified selected core 826 within the host 806 (as shown in FIG. 8B).

At block 1408, one of the branch sets within the root branched set may be elected for transfer or offload to the distributed event scheduler. For example, the CES 802 may determine the second branch set 816-2 to be offloaded onto the DES 824 based on the number of event queues that may be present in the second queue set 818-2. Other example conditions, basis which the CES 802 may determine to offload the second branch set 816-2 onto the DES 824 may include, but is not limited to, number of total events present in the first branch set 816-1 and the second branch set 816-2 or based on specific branch sets which may be representing a defined pipeline of event processing. It may be noted that the defined pipeline may represent one or more application conditions.

At block 1410, the offloaded second branch set may be processed by the distributed event scheduler on the selected core of the second host. For example, once offloaded onto the DES 824 (present the host 806), the second branch set 816-2 may be processed by the DES 824 on the selected core 826. To this end, the DES 824 may go through the second queue set 818-2 (which is hierarchically linked to the second branch set 816-2) and retrieve the event queues 822 (which are part of the second queue set 818-2). The event queues 822 and their corresponding events (not shown in FIG. 8B) may thereafter be processed on the selected core 826 within the host 806, which is remote to the host 804 (i.e., the host native to the CES 802), by the DES 824.

At block 1412, the distributed event scheduler may be terminated. For example, once all events are processed or in instances where a specified termination condition is met, the DES 824 may be terminated. Accordingly, the processing scope may be transferred back again to the CES 802. In an example, once the DES 824 is terminated, with the selected core 826 being returned back to the second set 810.

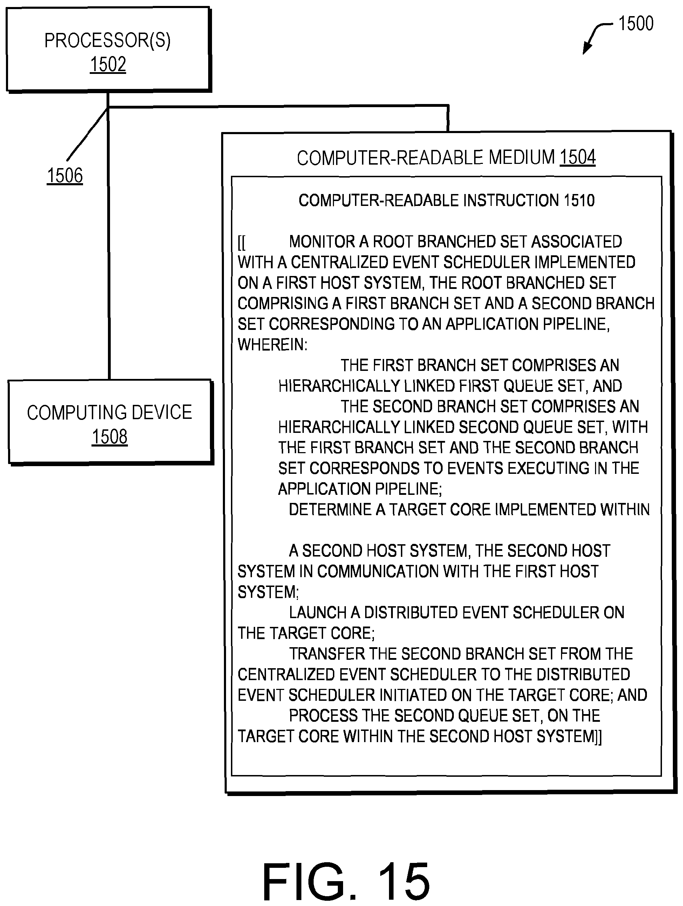

FIG. 15 illustrates a computing environment 1500 implementing a non-transitory computer readable medium for scheduling and processing events within event queues, using a distributed event scheduler. In an example, the computing environment 1500 includes processor(s) 1502 communicatively coupled to a non-transitory computer readable medium 1504 through a communication link 1506. In an example, the processor(s) 1502 may have one or more processing resources for fetching and executing computer-readable instructions from the non-transitory computer readable medium 1504. The processor(s) 1502 and the non-transitory computer readable medium 1504 may be implemented, for example, in the centralized event scheduler 802 (as has been described in conjunction with the preceding figures).

The non-transitory computer readable medium 1504 may be, for example, an internal memory device or an external memory device. In an example implementation, the communication link 1506 may be a network communication link. The processor(s) 1502 and the non-transitory computer readable medium 1504 may also be communicatively coupled to a computing device 1508 over the network.

In an example implementation, the non-transitory computer readable medium 1504 includes a set of computer readable instructions 1010 (referred to as instructions 1010) which may be accessed by the processor(s) 1502 through the communication link 1506. Referring to FIG. 15, in an example, the non-transitory computer readable medium 1504 includes instructions 1510 that cause the processor(s) 1502 to monitor a root branched set, such as the root branched set 814, associated with a centralized event scheduler implemented on a first host system. As may be understood, the root branched set 814 may include a first branch set, such as the first branch set 816-1, and a second branch set, such as the second branch set 816-2 corresponding to an application pipeline. In an example, the CES 802 may be running on the active core 812 of the host 804.

Thereafter, the instructions 1510 may be executed to determine a target core implemented within a second host system, which may be in communication with the first host system. In an example, the target core, such as the selected core 826, may be determined from the second set 810 using a list of available processing cores. In an example, the list of processing cores within the host 806 may be available within a shared memory resource, available to both host 804 and host 806.

The instructions 1510 may be further executed to launch a distributed event scheduler on the target core. For example, the instructions 1510 once executed may cause the CES 802 to launch a distributed event scheduler, i.e., DES 824 on a selected core 826 within the host 806 (as shown in FIG. 8B). Basis the execution of the instructions 1510, the CES 802 may determine the second branch set 816-2 to be offloaded onto the DES 824 based on the number of event queues that may be present in the second queue set 818-2. Once determined, the instructions 1510 may affect the transfer of the second branch set, i.e., second branch set 816-2, from the centralized event scheduler, i.e., CES 802, to the distributed event scheduler, DES 824, initiated on the target core, i.e., the selected core 726. Once offloaded or transferred, the instructions 1510 may result in the processing of the second queue set 818-2, which is within the second branch set 816-2, onto the selected core 826 within the second host system, i.e., the host 806.

In an example, the DES 824 may continue to process the event queue(s) present within the second queue set 818-2. Once all events are processed or in instances where a specified termination condition is met, the DES 824 may be terminated. Accordingly, the processing scope may be transferred back again to the CES 802. In an example, once the DES 824 is terminated, with the selected core 826 being returned back to the second set 810.

Although examples for the present disclosure have been described in language specific to structural features and/or methods, it is to be understood that the appended claims are not necessarily limited to the specific features or methods described. Rather, the specific features and methods are disclosed and explained as examples of the present disclosure.

## Claims

1. A system comprising:
at least one processor; and
a machine-readable storage medium comprising instructions executable by the processor, to:
monitor an event queue to detect presence of a plurality of events, wherein the event queue is associated with a centralized event scheduler;
determine number of available processing cores from amongst a plurality of processing cores, wherein the processing cores are to process assigned events;
launch a distributed event scheduler on a selected core, wherein the selected core is one of the plurality of processing cores; and
cause transfer of the event queue from the centralized event scheduler to the distributed event scheduler, for processing the event queue, on the selected core.

2. The system as claimed in claim 1, wherein to cause the transfer of the event queue, the instructions when executed are to:
determine a context scope corresponding to the distributed event scheduler; and
transfer the event queue to the context scope of the distributed event scheduler.

3. The system as claimed in claim 1, wherein the instructions are to cause termination of the distributed event scheduler based on any one of a termination condition, the termination condition comprising:
expiry of a predefined threshold time window;
a first termination call from the centralized event scheduler; and
detection of event for termination of the distributed event scheduler.

4. The system as claimed in claim 3, wherein the instructions, till the termination of the distributed event scheduler, are executable to continually launch other distributed event scheduler on an other available processing core for scheduling the processing of a second event queue.

5. The system as claimed in claim 1, wherein the event queue is one of a parallel queue and an atomic queue, wherein:
in the parallel queue, any new event is processed concurrently with any other event in the event queue on a shared pool of resources comprising the plurality of processing cores; and
in the atomic queue, any new event is processed on completion of processing of a preceding event in the event queue.

6. The system as claimed in claim 5, wherein the distributed event scheduler is to process the events of the atomic queue on the selected core.

7. The system as claimed in claim 5, wherein to process the events in the atomic queue, the instructions are to cause the distributed event scheduler to:
retrieve a first event from the atomic queue;
process the first event on the selected core, wherein the distributed event scheduler is also executing on the selected core;
based on a termination condition, perform one of:
retrieve a subsequent event from the atomic queue for processing on the selected core; and
transfer the atomic queue to the context scope of the centralized event scheduler.

8. The system as claimed in claim 5, wherein to process the events in the parallel queue, the instructions are to cause the distributed event scheduler to:
retrieve a first event from the parallel queue;
process the first event on any one of an available core in the shared pool of resources concurrently with the processing of any other events from the parallel queue by the centralized event scheduler; and
based on a termination condition, perform one of:
retrieve a subsequent event from the parallel queue for processing on the available core;
transfer the parallel queue to the context scope of the centralized event scheduler.

9. The system as claimed in claim 1, wherein the selected core is determined based on a list of available processing cores.

10. The system as claimed in claim 1, wherein the selected core is implemented on a selected processor tile, wherein the selected processor tile is remote from a native tile implementing the centralized event scheduler.

11. A method comprising:
monitoring a root branched set associated with a centralized event scheduler, the root branched set comprising a first branch set and a second branch set corresponding to an application pipeline, wherein the first branch set comprises a hierarchically linked first queue set and the second branch set comprises a hierarchically linked second queue set, each corresponding to events executing in the application pipeline;
determining a selected core from amongst a plurality of available processing cores in a pool of processing cores;
launching a distributed event scheduler on the selected core;
transferring the second branch set from the centralized event scheduler to the distributed event scheduler; and
processing the second queue set, on the selected core.

12. The method as claimed in claim 11, wherein the second queue set comprises a plurality of hierarchically linked event queues.

13. The method as claimed in claim 12, further comprises:
identifying a target event queue from amongst the hierarchically linked event queues;
launching subordinate distributed event scheduler; and
scheduling the target event queue on the subordinate distributed event scheduler for processing.

14. The method as claimed in claim 11, wherein the selected core is remote from a native core onto which the centralized event scheduler is executing.

15. The method as claimed in claim 11, wherein the selected core is implemented in one of:
a processing tile which is remote to a native processing tile implementing the native core; and
a remote non-uniform memory access (NUMA) node which is remote to a native NUMA node implementing the native core.

16. A non-transitory computer-readable medium comprising instructions, the instructions being executable by a processing resource to:
monitor a root branched set associated with a centralized event scheduler implemented on a first host system, the root branched set comprising a first branch set and a second branch set corresponding to an application pipeline, wherein:
the first branch set comprises a hierarchically linked first queue set, and
the second branch set comprises a hierarchically linked second queue set, with the first branch set and the second branch set corresponds to events executing in the application pipeline;
determine a target core implemented within a second host system, the second host system in communication with the first host system;
launch a distributed event scheduler on the target core;
transfer the second branch set from the centralized event scheduler to the distributed event scheduler initiated on the target core; and
process the second queue set, on the target core within the second host system.

17. The non-transitory computer-readable medium as claimed in claim 16, wherein the instructions are executable to determine the target core are to:
access a list of available processing cores in the second host system; and
identify the target core from amongst the list if available processing cores.

18. The non-transitory computer-readable medium as claimed in claim 16, wherein the first host system and the second host system are to use a shared memory resource, wherein the shared memory resource comprises a listing of free processing core within the second host system.

19. The non-transitory computer-readable medium as claimed in claim 16, wherein the instructions are executable to cause termination of the distributed event scheduler on the second host system based on any one of a termination condition, the termination condition comprising:
expiry of a predefined time period;
a first termination call from the centralized event scheduler; and
detection of event for termination of the distributed event scheduler.

20. The non-transitory computer-readable medium as claimed in claim 16, wherein the instructions are executable to:
identify a target event queue from amongst the hierarchically linked event queues;
initiate a subordinate distributed event scheduler on the target core; and
schedule processing of the target event queue on the subordinate distributed event scheduler.
